# EUROPEAN PATENT SPECIFICATION

(11) **EP 2 093 046 B1**
(45) Date of publication and mention of the grant of the patent: **24.09.2014**
(21) Application number: 07832109.8
(22) Date of filing: 19.11.2007
(51) Int. Cl.: B29D 30/30, B60C 19/00

(54) **METHOD OF PRODUCING PNEUMATIC TIRE**
VERFAHREN ZUR HERSTELLUNG EINES LUFTREIFENS
PROCÉDÉ DE PRODUCTION DE PNEU

(30) Priority: 14.12.2006 JP 2006336572
(43) Date of publication of application: 26.08.2009
(73) Proprietor: The Yokohama Rubber Co., Ltd., Minato-ku Tokyo 105-8685 (JP)
(72) Inventor: TANNO, Atsushi, Hiratsuka-shi Kanagawa 254-8601 (JP); SATOH, Yuji, Hiratsuka-shi Kanagawa 254-8601 (JP)
(74) Representative: HOFFMANN EITLE
(86) International application number: PCT/JP2007/072379
(87) International publication number: WO 2008/072449

(56) References cited:
- EP-A1- 1 510 366
- EP-A1- 1 659 004
- JP-A- 2004 163 134
- JP-A- 2006 044 503
- JP-A- 2006 044 503
- US-A1- 2004 206 440
- US-A1- 2006 231 185

## Description

### TECHNICAL FIELD

The present invention relates to a method of producing a pneumatic tire having at least one hook-and-loop fastener on the inner surface of the tire.

### TECHNICAL BACKGROUND

In order to reduce the cavity resonance sound of a pneumatic tire, a sound-absorbing member is provided on the inner surface of the tire facing the cavity of the tire. The present applicant has proposed a pneumatic tire having a hook-and-loop fastener formed of resin such as nylon or polyester on the inner surface of the tire in order to facilitate attaching such a sound-absorbing member to the tire (see Japanese Patent Application Kokai Publication 2006-44503, for example).

The sound-absorbing member also has a hook-and-loop fastener which is engagable with the hook-and-loop fastener provided on the inner surface of the tire. An advantage is that the sound-absorbing member can be easily attached to the inner surface of the tire by engaging the hook-and-loop fasteners with each other and can be easily detached therefrom as necessary.

The above-mentioned pneumatic tire having a hook-and-loop fastener on the inner surface of the tire is generally produced by putting the hook-and-loop fastener on the inner surface of a green tire which has been built and then vulcanizing the green tire. The steps for producing a pneumatic tire include a step of expanding and deforming into a toroidal shape a cylindrical first formed body formed by sticking an inner liner, a carcass ply and the like on a building drum. The inner peripheral length of the first formed body is greatly elongated in the expanding step. Therefore, if the hook-and-loop fastener formed of resin such as nylon or polyester is annularly attached to the first formed body before expansion and deformation, the hook-and-loop fastener drops in the expanding step because the hook-and-loop fastener can not follow the expansion and deformation of the first formed body. Thus, the hook-and-loop fastener is attached to a green tire the first formed body of which has been expanded and deformed.

However, since the hook-and-loop fastener is attached to the inner surface in the cavity of the green tire around the entire circumference, the hook-and-loop fastener attaching process is cumbersome and attachment processability is deteriorated, which contributes to a decrease in tire productivity. Further, since the hook-and-loop fastener is attached by hand to the inner surface of the tire in the form of a curved surface, it is difficult to attach the hook-and-loop fastener in a balanced manner around the entire circumference of the tire, and deterioration of tire uniformity can not be avoided.

Further relevant background art includes:
JP 2006-044503 A, which discloses a surface fastener equipped on a tire inner surface, with a sound absorbing material fitted on the tire inner surface through the surface fastener; and US 2004/0206440 A1, which discloses a pneumatic tire which enables improvement of durability when air column sound is reduced by adding a member to a bead portion to change a sectional shape of a closed space in a tire circumferential direction, and a tire manufacturing method which enables the improvement of productivity.

However, neither of these documents disclose a method of producing a pneumatic tire having at least one hook-and-loop fastener provided along a circumferential direction of the tire facing a cavity of the tire, comprising the step of forming on a building drum a cylindrical first formed body with the at least one hook-and-loop fastener intermittently attached to a radially inner surface thereof along a circumferential direction of the drum.

Yet further background art includes EP 1 659 004 A1, US 2006/231 185 A1, EP 1 510 366 A1 and JP 2004 163134 A.

### SUMMARY OF THE INVENTION

The object of the present invention is to provide a method of producing a pneumatic tire having a hook-and-loop fastener on the inner surface of the tire in which productivity can be improved and deterioration of uniformity can be avoided.

According to the present invention, there is provided a method of producing a pneumatic tire having at least one hook-and-loop fastener provided along a circumferential direction of the tire on an inner surface of the tire facing a cavity of the tire, comprising the steps of forming on a building drum a cylindrical first formed body with the at least one hook-and-loop fastener intermittently attached to a radially inner surface thereof along a circumferential direction of the drum, forming a green tire by expanding the first formed body into a toroidal shape to press the first formed body against an inner peripheral side of an annular second formed body, and vulcanizing the green tire.

Particular embodiments of the invention are the subject of the dependent claims.

By intermittently attaching the hook-and-loop fastener to the radially inner surface of the first formed body, parts of the first formed body where the hook-and-loop fastener is not attached are elongated during expansion and deformation. Therefore, even when the hook-and-loop fastener does not follow the expansion and deformation of the first formed body, the hook-and-loop fastener does not drop from the first formed body.

Thus, the hook-and-loop fastener can be attached on the building drum. Therefore, the attachment process of the hook-and-loop fastener is facilitated, and productivity can be enhanced. Further, the hook-and-loop fastener can easily be attached at predetermined positions on the building drum. Therefore, weight imbalance arising from attachment of the hook-and-loop fastener is prevented and deterioration of uniformity can be avoided.

### BRIEF DESCRIPTION OF THE DRAWINGS

In order to better understand the present invention, and to show how the same may be carried into effect, reference will be made, by way of example only, to the accompanying drawings, in which:
FIG. 1 is a half cross-sectional view of a pneumatic tire produced by a first example of a method of producing a pneumatic tire according to the present invention;
FIG. 2 is a partial perspective view simplistically showing the pneumatic tire in a state where the inner surface of the tire is shown;
FIG. 3 is a plan view showing a step of attaching hook-and-loop fasteners to an unvulcanized rubber sheet in the first example of a method of producing a pneumatic tire according to the present invention, the hook-and-loop fasteners being shown in a state where their engaging elements are omitted;
FIG. 4 is a plan view showing another example of the step of FIG. 3;
FIG. 5 is an explanatory drawing illustrating a step of applying the unvulcanized rubber sheet with the hook-and-loop fasteners onto a building drum;
FIG. 6 is an explanatory drawing illustrating a step of further applying tire components onto the unvulcanized rubber sheet to form a first formed body;
FIG. 7 is an explanatory drawing illustrating a step of expanding the first formed body to press it against a second formed body;
FIG. 8 is a plan view showing a step of attaching a hook-and-loop fastener to an unvulcanized rubber sheet in a second example of a method of producing a pneumatic tire according to the present invention, the hook-and-loop fastener being shown in a state where its engaging elements are omitted;
FIG. 9 is a partial cross-sectional view showing a step of cutting the hook-and-loop fastener in the second example of a method of producing a pneumatic tire according to the present invention;
FIG. 10 is an illustration of the unvulcanized rubber sheet that has been deformed in the second example of a method of producing a pneumatic tire according to the present invention;
FIG. 11 is a plan view showing a step of attaching a hook-and-loop fastener to an unvulcanized rubber sheet in a third example of a method of producing a pneumatic tire according to the present invention, the hook-and-loop fastener being shown in a state where its engaging elements are omitted;
FIG. 12 is a partial plan view of the hook-and-loop fastener in FIG. 11;
FIG. 13 is a partial cross-sectional view of the unvulcanized rubber sheet with the hook-and-loop fastener in the third example of a method of producing a pneumatic tire according to the present invention;
FIG. 14 is an illustration of the hook-and-loop fastener cut by deformation of the unvulcanized rubber sheet in the third example of a method of producing a pneumatic tire according to the present invention;
FIG. 15 is a side view showing a step of attaching a hook-and-loop fastener to an unvulcanized rubber sheet in a fourth example of a method of producing a pneumatic tire according to the present invention;
FIG. 16 is an illustration of the hook-and-loop fastener shown in a state where the hook-and-loop fastener is deformed by deformation of the unvulcanized rubber sheet in the fourth example of a method of producing a pneumatic tire according to the present invention;
FIG. 17 is a side view showing another example of attaching wavily bent hook-and-loop fasteners to the unvulcanized rubber sheet in the fourth example of a method of producing a pneumatic tire according to the present invention;
FIG. 18 is a side view showing a step of attaching a hook-and-loop fastener to an unvulcanized rubber sheet in a fifth example of a method of producing a pneumatic tire according to the present invention;
FIG. 19 is an illustration of the hook-and-loop fastener shown in a state where the hook-and-loop fastener is deformed by deformation of the unvulcanized rubber sheet in the fifth example of a method of producing a pneumatic tire according to the present invention; and
FIG. 20 is a cross-sectional view simplistically showing another example of a pneumatic tire having hook-and-loop fasteners, produced by a method of producing a pneumatic tire according to the present invention.

### DETAILED DESCRIPTION

The present invention will be described in detail below with reference to the attached drawings.

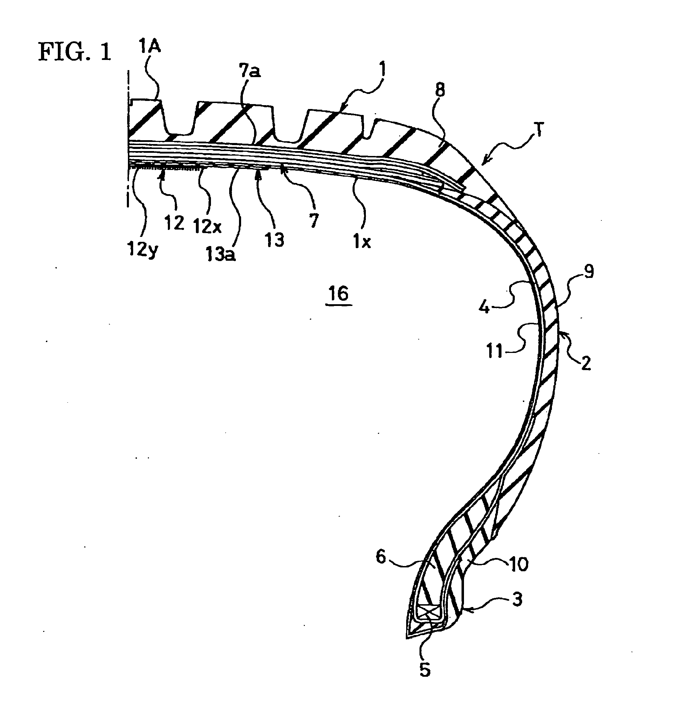

Referring to FIG. 1, there is shown an example of a pneumatic tire produced by a method of producing a pneumatic tire according to the present invention; reference symbol T denotes a pneumatic tire, reference numeral 1 denotes a tread portion, reference numeral 2 denotes a sidewall portion, and reference numeral 3 denotes a bead portion.

A carcass ply 4 extends between right and left bead portions 3, the carcass ply 4 having a rubber layer and reinforcing cords embedded therein, the reinforcing cords extending in the radial direction of the tire and being arranged at prescribed intervals in the circumferential direction of the tire. The carcass ply 4 has opposite end portions which are each turned up around a bead core 5 embedded in a bead portion 3 from the axially inner side of the tire towards the axially outer side of the tire with a bead filler 6 being sandwiched.

A plurality of belt plies 7 are disposed radially outwardly of the carcass ply 4 in the tread portion 1. A plurality of belt-reinforcing plies 7a are provided radially outwardly of the plurality of belt plies 7. A tread rubber layer 8 is placed radially outwardly of the belt-reinforcing plies 7a. A side rubber layer 9 is disposed outwardly of the carcass ply 4 in each sidewall portion 2. A cushion rubber layer 10 is provided outwardly of the turned-up portion of the carcass ply 4 in each bead portion 3.

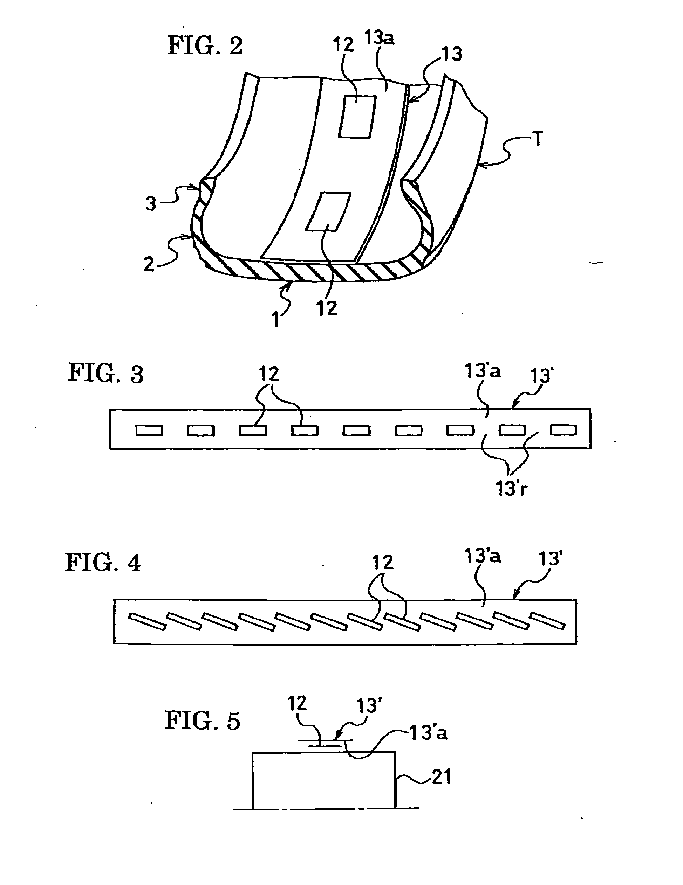

An inner liner 11 acting as an air impermeable layer is disposed inwardly of the carcass ply 4. A plurality of hook-and-loop fasteners 12 are provided inwardly of the inner liner 11 in the tread portion 1, facing the cavity 16 of the tire. The hook-and-loop fasteners 12 are attached to the inner line 11 via a rubber sheet layer 13. The rubber sheet layer 13 has a radially inner surface 13a, to which the hook-and-loop fasteners 12 are intermittently attached at prescribed intervals along the longitudinal direction of the rubber sheet (tire circumferential direction) as shown in FIG. 2.

Each hook-and-loop fastener 12 is formed of resin such as nylon or polyester, and includes a substrate 12x formed of a sheet-shaped foundation cloth and hook-shaped engaging elements 12y provided on one face thereof. An appendage (not shown) such as a sound-absorbing member having hook-and-loop fasteners engageable with the hook-and-loop fasteners 12 is detachably attached to the hook-and-loop fasteners 12 exposed on the inner surface 1x of the tire in a center area 1A of the tread portion 1. The engaging elements 12y of the hook-and-loop fastener 12 are formed into a hook shape. However, there is no limitation thereto. If the engaging elements 12y of the hook-and-loop fastener 12 can be engaged with the hook-and-loop fasteners attached to the appendage, any shape such as a loop shape may be employed.

A method of producing a pneumatic tire T having a construction shown in FIG. 1 will be described below with reference to FIGS. 3 to 7, according to a first example of a method of producing a pneumatic tire according to the present invention.

First, as shown in FIG. 3, hook-and-loop fasteners 12 are intermittently attached to one face 13'a of an unvulcanized rubber sheet 13' at prescribed intervals along the longitudinal direction of the rubber sheet. The longitudinal direction of the rubber sheet corresponds to the circumferential direction of a building drum 21 described later; the hook-and-loop fasteners 12 are intermittently attached along the circumferential direction of the building drum 21. The attachment of the hook-and-loop fasteners 12 is performed by bonding the substrate 12x with an adhesive agent to the one face 13'a of the unvulcanized rubber sheet 13'. If hook-and-loop fasteners having engaging elements on the opposite sides are used for the hook-and-loop fasteners 12, the hook-and-loop fasteners 12 can be attached to the unvulcanized rubber sheet 13' by embedding engaging elements on one side as anchors in the unvulcanized rubber sheet 13'. If the hook-and-loop fasteners 12 can be attached, means other than the above may be employed.

For rubber used for the unvulcanized rubber sheet 13', the same one as rubber used for the inner liner 11 is preferably used in terms of adhesion. Rubber used for the two preferably includes, for example, butyl rubber which has a high air impermeable effect.

In FIG. 3, the hook-and-loop fasteners 12 are disposed in line along the longitudinal direction of the rubber sheet. Alternatively, as shown in

FIG. 4, the hook-and-loop fasteners 12 may be arranged along the longitudinal direction of the rubber sheet with the hook-and-loop fasteners 12 obliquely placed.

It is preferable that each hook-and-loop fastener 12 be as short as possible in length in the longitudinal direction of the rubber sheet if an appendage can be attached. A portion of the unvulcanized rubber sheet 13' to which the hook-and-loop fastener 12 is attached is placed under restraint by the hook-and-loop fastener 12 and does not elongate. Therefore, elongation of a carcass ply inside is restrained during expansion of a first formed body 22 described later. Thus, by shortening the length of each hook-and-loop fastener 12 to intermittently dispose a lot of hook-and-loop fasteners 12, occurrence of disarray of reinforcing cord arrangement of the carcass ply can be restrained.

Next, as shown in FIG. 5, the unvulcanized rubber sheet 13' with the hook-and-loop fasteners 12 is applied onto a building drum 21 around the entire circumference with the one face 13'a facing the building drum 21.

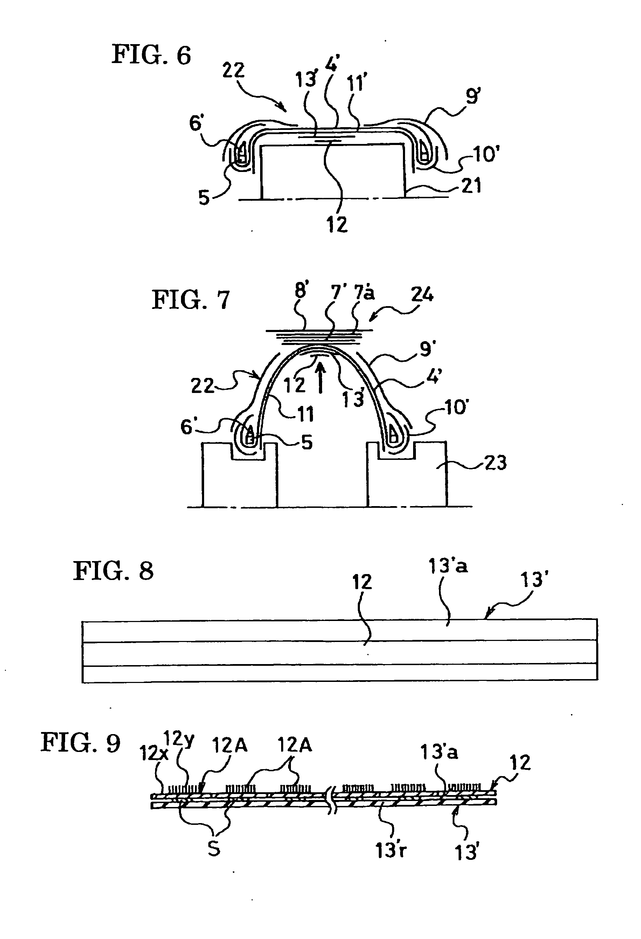

After application of the unvulcanized rubber sheet 13', unvulcanized inner liner 11', unvulcanized carcass ply 4', bead cores 5 with an unvulcanized bead filler 6', unvulcanized cushion rubber layers 10' and unvulcanized side rubber layers 9' are sequentially applied to form a first formed body 22 as is conventional (see FIG. 6). That is, remaining tire components constituting the first formed body 22 are applied onto the unvulcanized rubber sheet 13' to form the first formed body 22 on the building drum 21.

After removal of the first formed body 22 from the building drum 21, as shown in FIG. 7, the first formed body 22 is mounted on a shaping drum 23 and an inner pressure is applied to the first formed body 22 to lift the first formed body 22. This expands and deforms the first formed body 22 into a toroidal shape. At this time, the inner peripheral length of the first formed body 22 is greatly extended. Even when it is greatly extended, a rubber portion 13'r of the unvulcanized rubber sheet 13' exists between each pair of adjacent hook-and-loop fasteners 12. Therefore, the rubber portion 13'r elongates following deformation; even when the hook-and-loop fasteners 12 do not follow the expansion and deformation of the first formed body 22, the hook-and-loop fasteners 12 do not drop from the unvulcanized rubber sheet 13'.

The first formed body 22 expanded and deformed into a toroidal shape is pressed against the inner peripheral side of an annular second formed body 24 disposed radially outwardly of the first formed body 22 to form a green tire (not shown) with the hook-and-loop fasteners 12 provided along the circumferential direction of the tire on the inner surface of the tire, the second formed body 24 having unvulcanized belt plies 7', unvulcanized belt-reinforcing plies 7a and an unvulcanized tread rubber layer 8' stuck to one another. The green tire is set in a tire curing press to vulcanize it. The hook-and-loop fasteners 12 are bonded by vulcanization to the vulcanized rubber sheet 13, and the pneumatic tire T shown in FIG. 1 is produced.

According to examples of the present invention as described above, since the hook-and-loop fasteners 12 are intermittently attached to form the first formed body 22, the rubber portions 13'r of the unvulcanized rubber sheet 13' where the hook-and-loop fasteners 12 are not provided follow the deformation of the first formed body 22 and are elongated when the first formed body 22 is expanded and deformed into a toroidal shape. Therefore, dropping of the hook-and-loop fasteners 12 can be avoided.

Accordingly, the hook-and-loop fasteners 12 can be attached on the building drum 21. Therefore, the attachment process of the hook-and-loop fasteners 12 is facilitated, and productivity can be improved. On the other hand, the hook-and-loop fasteners 12 can easily be attached at predetermined positions on the building drum 21. Therefore, deterioration of uniformity caused by weight imbalance arising from attachment of the hook-and-loop fasteners 12 can be avoided.

Referring to FIGS. 8 to 10, there is shown a second example of a method of producing a pneumatic tire according to the present invention. In this second example, one belt-shaped hook-and-loop fastener 12 is used as shown in FIG. 8. The belt-shaped hook-and-loop fastener 12 is attached to one face 13'a of an unvulcanized rubber sheet 13' along the longitudinal direction of the rubber sheet. At this time, as shown in FIG. 9, the substrate 12x of the belt-shaped hook-and-loop fastener 12 is intermittently attached to the unvulcanized rubber sheet 13' at prescribed intervals with an adhesive agent S. If a hook-and-loop fastener having engaging elements on the opposite sides is used for the belt-shaped hook-and-loop fastener 12, as in the above, the belt-shaped hook-and-loop fastener 12 can be attached to the unvulcanized rubber sheet 13' by embedding engaging elements on one side as anchors in the unvulcanized rubber sheet 13'.

Next, the belt-shaped hook-and-loop fastener 12 is cut at prescribed intervals to divide the belt-shaped hook-and-loop fastener 12 into a plurality of hook-and-loop fastener pieces 12A. At this time, the belt-shaped hook-and-loop fastener 12 is cut at positions away from the attachment positions of the belt-shaped hook-and-loop fastener 12, preferably in the center between each pair of adjacent attachment positions.

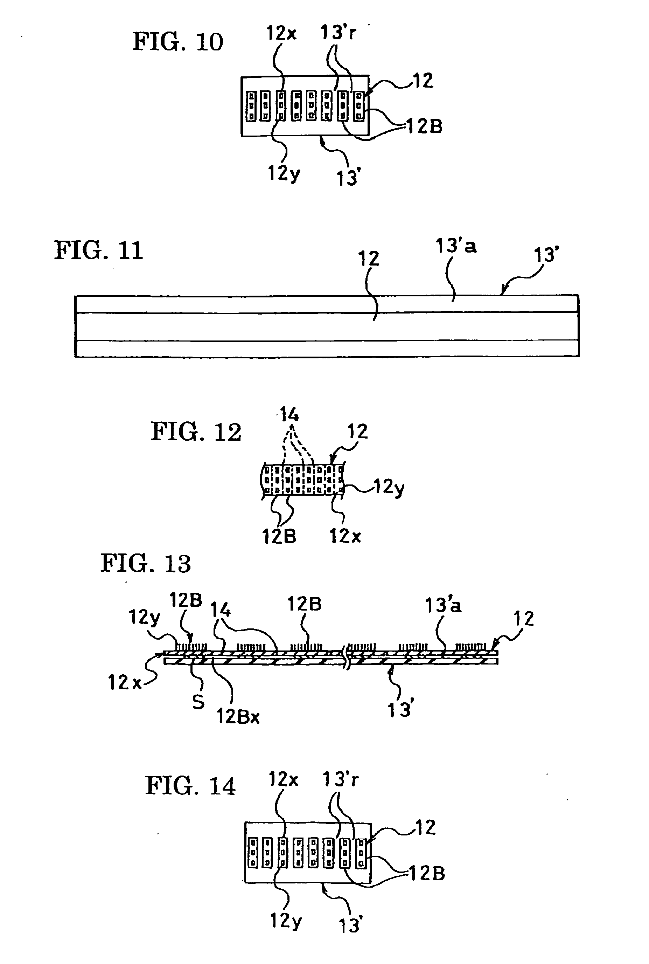

Hereinafter, as in the first example, the unvulcanized rubber sheet 13' with the belt-shaped hook-and-loop fastener 12 is applied onto a building drum 21 to form a first formed body 22, and the first formed body 22 is then expanded and deformed into a toroidal shape by a shaping drum 23 to press it against the inner peripheral side of a second formed body 24, forming a green tire. When the first formed body 22 is expanded and deformed into a toroidal shape, each rubber portion 13'r of the unvulcanized rubber sheet 13' between attachment positions of the belt-shaped hook-and-loop fastener 12 is elongated following the expansion and deformation (see FIG. 10). Therefore, the belt-shaped hook-and-loop fastener 12 that has been cut into the hook-and-loop fastener pieces 12A does not drop from the unvulcanized rubber sheet 13'. The formed green tire is vulcanized, obtaining a pneumatic tire having the hook-and-loop fastener pieces 12A disposed at prescribed intervals along the circumferential direction of the tire on the inner surface of the tire facing the cavity of the tire, as shown in FIG. 1.

Referring to FIGS. 11 to 14, there is shown a third example of a method of producing a pneumatic tire according to the present invention. In this third example, as shown in FIG. 12, one belt-shaped hook-and-loop fastener 12 having cut lines 14 provided at prescribed intervals is used. The belt-shaped hook-and-loop fastener 12 is attached to one face 13'a of an unvulcanized rubber sheet 13' along the longitudinal direction of the rubber sheet as shown in FIG. 11. At this time, as shown in FIG. 13, the substrate portion 12Bx of each of parts 12B of the belt-shaped hook-and-loop fastener 12 sectioned by the cut lines 14 is bonded in the center with an adhesive agent S to the one face 13'a of an unvulcanized rubber sheet 13' to intermittently attach the belt-shaped hook-and-loop fastener 12 to the unvulcanized rubber sheet 13'. If a hook-and-loop fastener having engaging elements on the opposite sides is used for the belt-shaped hook-and-loop fastener 12, as in the above, the belt-shaped hook-and-loop fastener 12 can be attached to the unvulcanized rubber sheet 13' by embedding engaging elements on one side as anchors in the unvulcanized rubber sheet 13'.

Hereinafter, as in the first example, the unvulcanized rubber sheet 13' with the belt-shaped hook-and-loop fastener 12 is applied onto a building drum 21 to form a first formed body 22, and the first formed body 22 is then expanded and deformed into a toroidal shape by a shaping drum 23 to press it against the inner peripheral side of a second formed body 24, forming a green tire. When the first formed body 22 is expanded and deformed into a toroidal shape, as shown in FIG. 14, the belt-shaped hook-and-loop fastener 12 is cut into hook-and-loop fastener pieces 12B by the cut lines 14 and each rubber portion 13'r of the unvulcanized rubber sheet 13' between attachment positions of the belt-shaped hook-and-loop fastener 12 is elongated following the expansion and deformation.

Therefore, the belt-shaped hook-and-loop fastener 12 does not drop from the unvulcanized rubber sheet 13'. The formed green tire is vulcanized, obtaining a pneumatic tire having the hook-and-loop fastener pieces 12B disposed at prescribed intervals along the circumferential direction of the tire on the inner surface of the tire facing the cavity of the tire, as shown in FIG. 1.

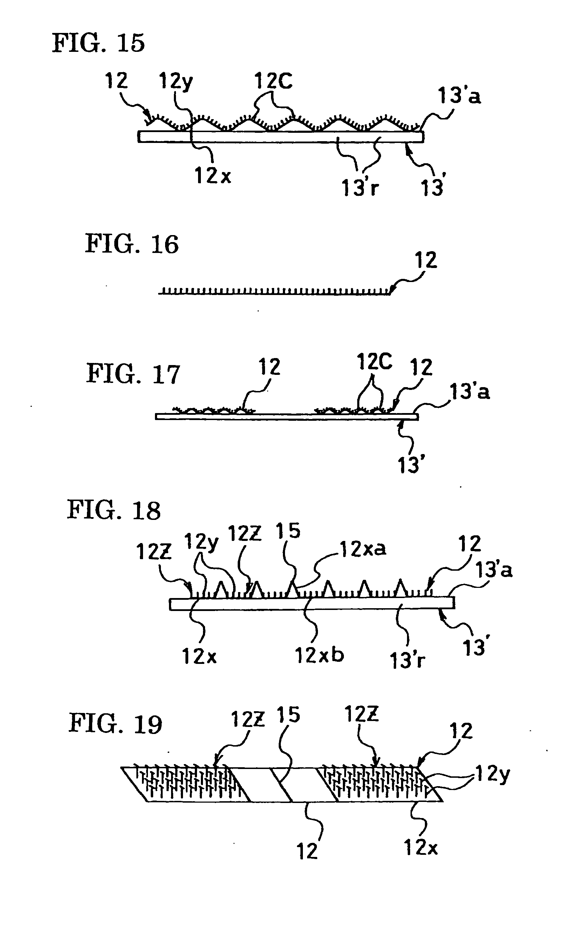

Referring to FIGS. 15 and 16, there is shown a fourth example of a method of producing a pneumatic tire according to the present invention. In this fourth example, one belt-shaped hook-and-loop fastener 12 is used. The belt-shaped hook-and-loop fastener 12 has a length greater than the inner peripheral length of the first formed body 22 (thus, the length of the unvulcanized rubber sheet 13' in the longitudinal direction of the rubber sheet). The length of the belt-shaped hook-and-loop fastener 12 is properly set in accordance with the expansion rate of the first formed body 22 expanded by a shaping drum 23.

As shown in FIG. 15, the above belt-shaped hook-and-loop fastener 12 is intermittently attached with an adhesive agent (not shown) to one face 13'a of the unvulcanized rubber sheet 13' along the longitudinal direction of the rubber sheet in a state where the belt-shaped hook-and-loop fastener 12 is bent in a wavy shape. This allows a slack part 12C of the hook-and-loop fastener 12 between each pair of adjacent attachment positions to be deformed following the expansion and deformation of the first formed body 22.

Hereinafter, as in the first example, the unvulcanized rubber sheet 13' with the belt-shaped hook-and-loop fastener 12 is applied onto a building drum 21 to form the first formed body 22, and the first formed body 22 is then expanded and deformed into a toroidal shape by the shaping drum 23 to press it against the inner peripheral side of a second formed body 24, forming a green tire. When the first formed body 22 is expanded and deformed into a toroidal shape, each rubber portion 13'r of the unvulcanized rubber sheet 13' between attachment positions of the belt-shaped hook-and-loop fastener 12 is elongated following the expansion and deformation, and the slack part 12C deforms following the deformation of the rubber portion 13'r (see FIG. 16). Therefore, the belt-shaped hook-and-loop fastener 12 does not drop from the unvulcanized rubber sheet 13'. The formed green tire is vulcanized, obtaining a pneumatic tire having the belt-shaped hook-and-loop fastener 12 disposed around the entire circumference along the circumferential direction of the tire on the inner surface of the tire facing the cavity of the tire.

In FIG. 15, an example of use of one belt-shaped hook-and-loop fastener 12 is shown. As shown in FIG. 17, a plurality of shorter hook-and-loop fasteners 12 (two in FIG. 17) may be intermittently attached with an adhesive agent to the one face 13'a of the unvulcanized rubber sheet 13' along the longitudinal direction of the rubber sheet in a state where the hook-and-loop fasteners 12 are each bent in a wavy shape.

Referring to FIGS. 18 and 19, there is shown a fifth example of a method of producing a pneumatic tire according to the present invention. In this fifth example, one belt-shaped hook-and-loop fastener 12 having a substrate 12x and groups 12Z of engaging elements 12y disposed thereon at prescribed intervals is used. The belt-shaped hook-and-loop fastener 12 has a fold line 15 crossing in the width direction of the hook-and-loop fastener 12 in the center of a substrate part 12xa located between each pair of adjacent engaging element groups 12Z. The substrate part 12xa can be folded via the fold line 15. The belt-shaped hook-and-loop fastener 12 also has a length greater than the inner peripheral length of the first formed body 22, that is, the length of the unvulcanized rubber sheet 13' in the longitudinal direction to which the belt-shaped hook-and-loop fastener 12 is attached.

As shown in FIG. 18, the belt-shaped hook-and-loop fastener 12 is intermittently attached to one face 13'a of the unvulcanized rubber sheet 13' along the longitudinal direction of the rubber sheet in a state where each substrate part 12xa of the belt-shaped hook-and-loop fastener 12 is folded via the fold line 15 in a reverse V shape. At this time, the parts 12xb of the substrate 12x where the engaging element groups 12Z are provided are bonded with an adhesive agent (not shown) to the one face 13'a of the unvulcanized rubber sheet 13'. This allows the substrate part 12xa of the belt-shaped hook-and-loop fastener 12 to be deformed following the expansion and deformation of the first formed body 22.

Hereinafter, as in the first example, the unvulcanized rubber sheet 13' with the belt-shaped hook-and-loop fastener 12 is applied onto a building drum 21 to form the first formed body 22, and the first formed body 22 is then expanded and deformed into a toroidal shape by a shaping drum 23 to press it against the inner peripheral side of a second formed body 24, forming a green tire. When the first formed body 22 is expanded and deformed into a toroidal shape, each rubber portion 13'r of the unvulcanized rubber sheet 13' between attachment positions of the belt-shaped hook-and-loop fastener 12 is elongated following the deformation, and the substrate part 12xa deforms following the deformation of the rubber portion 13'r. Therefore, the belt-shaped hook-and-loop fastener 12 does not drop from the unvulcanized rubber sheet 13'. The formed green tire is vulcanized, obtaining a pneumatic tire having the belt-shaped hook-and-loop fastener 12 disposed around the entire circumference along the circumferential direction of the tire on the inner surface of the tire facing the cavity of the tire.

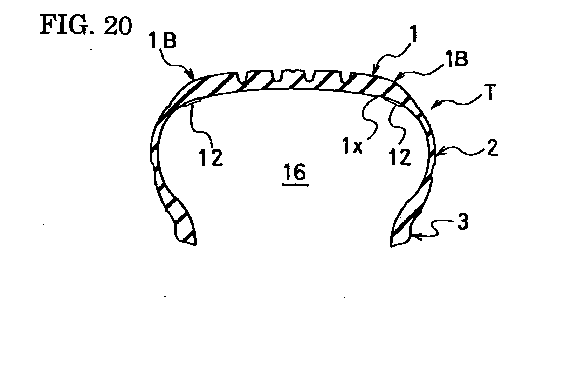

The above examples of production of a pneumatic tire have the hook-and-loop fastener(s) 12 on the inner surface 1x of the tire in the center area 1A of the tread portion 1. However, the present invention is not limited thereto, and may be a method of producing a pneumatic tire having the hook-and-loop fasteners 12 on the inner surface 1x of the tire in both shoulder areas 1B of the tread portion 1 as shown in FIG. 20.

In the present invention, it is preferable in terms of easier production that the first formed body 22 be formed using the unvulcanized rubber sheet 13' to which the hook-and-loop fastener(s) 12 has been attached in advance as described in the above examples. However, there is no limitation thereto. For example, the hook-and-loop fastener(s) 12 may be preliminarily attached to the unvulcanized inner liner 11' located innermost of the tire as in the above.

### INDUSTRIAL APPLICABILITY

The present invention having the aforementioned excellent effects is applicable to production of a pneumatic tire having a hook-and-loop fastener on the inner surface of the tire.

## Claims

1. A method of producing a pneumatic tire having at least one hook-and-loop fastener (12) provided along a circumferential direction of the tire on an inner surface (13a) of the tire facing a cavity (16) of the tire, comprising the steps of:
forming on a building drum (21) a cylindrical first formed body (22) with the at least one hook-and-loop fastener (12) intermittently attached to a radially inner surface (13a) thereof along a circumferential direction of the drum (21);
forming a green tire by expanding the first formed body (22) into a toroidal shape to press the first formed body (22) against an inner peripheral side of an annular second formed body (24); and
vulcanizing the green tire.

2. The method of producing a pneumatic tire according to claim 1, wherein the at least one hook-and-loop fastener (12) comprises a plurality of hook-and-loop fasteners (12), and wherein the step of forming the first formed body (22) comprises attaching the plurality of hook-and-loop fasteners (12) to one face of an unvulcanized rubber sheet (13') at prescribed intervals along a longitudinal direction of the rubber sheet, applying the unvulcanized rubber sheet (13') onto the building drum (21) with the one face facing the building drum, and applying remaining tire components constituting the first formed body (22) onto the unvulcanized rubber sheet (13') to form the first formed body (22).

3. The method of producing a pneumatic tire according to claim 1, wherein the at least one hook-and-loop fastener (12) comprises one belt-shaped hook-and-loop fastener (12), and wherein the step of forming the first formed body (22) comprises attaching the belt-shaped hook-and-loop fastener (12) intermittently to one face (13'a) of an unvulcanized rubber sheet (13') along a longitudinal direction of the rubber sheet, cutting the belt-shaped hook-and-loop fastener (12) at prescribed intervals at positions away from attachment positions thereof, applying the unvulcanized rubber sheet (13') onto the building drum (21) with the one face (13'a) facing the building drum (21), and applying remaining tire components constituting the first formed body (22) onto the unvulcanized rubber sheet (13') to form the first formed body (22).

4. The method of producing a pneumatic tire according to claim 1, wherein the at least one hook-and-loop fastener (12) comprises one belt-shaped hook-and-loop fastener (12) having cut lines provided at prescribed intervals, and wherein the step of forming the first formed body (22) comprises attaching the belt-shaped hook-and-loop fastener (12) intermittently to one face of an unvulcanized rubber sheet (13') along a longitudinal direction of the rubber sheet, applying the unvulcanized rubber sheet (13') onto the building drum (21) with the one face facing the building drum (21), and applying remaining tire components constituting the first formed body onto the unvulcanized rubber sheet (13') to form the first formed body (22).

5. The method of producing a pneumatic tire according to claim 1, wherein the at least one hook-and-loop fastener (12) comprises one belt-shaped hook-and-loop fastener (12) having a length greater than an inner peripheral length of the first formed body (22), and wherein the step of forming the first formed body (22) comprises attaching the belt-shaped hook-and-loop fastener (12) intermittently to one face (13'a) of an unvulcanized rubber sheet (13') along a longitudinal direction of the rubber sheet in a state where portions of the belt-shaped hook-and-loop fastener (12) located between attachment positions are bent, applying the unvulcanized rubber sheet (13') onto the building drum (21) with the one face (13'a) facing the building drum (21), and applying remaining tire components constituting the first formed body (22) onto the unvulcanized rubber sheet (13') to form the first formed body (22).

6. The method of producing a pneumatic tire according to any one of claims 2 to 5, wherein the hook-and-loop fastener(s) (12) is attached with an adhesive agent to the one face of the unvulcanized rubber sheet (13').

## Patentansprüche

1. Verfahren zur Herstellung eines Luftreifens mit wenigstens einem Klettverschluss (12), der entlang einer Umfangsrichtung des Reifens an einer inneren Fläche (13a) des Reifens, die einem Hohlraum (16) des Reifens zugewandt ist, vorgesehen ist, mit den Schritten:
Ausbilden eines zylindrischen ersten geformten Körpers (22) auf einer Aufbautrommel (21) mit zumindest einem Klettverschluss (12), der periodisch an einer radial inneren Fläche (13a) davon entlang einer Umfangsrichtung der Trommel (21) angebracht ist;
Ausbilden eines Reifenrohlings durch Ausdehnen des ersten geformten Körpers (22) in eine toroidale Form, um den ersten geformten Körper (22) gegen eine innere Umfangsseite eines ringförmigen zweiten geformten Körpers (24) zu pressen; und
Vulkanisieren des Reifenrohlings.

2. Verfahren zur Herstellung eines Luftreifens nach Anspruch 1, wobei
der zumindest eine Klettverschluss (12) mehrere Klettverschlüsse (12) aufweist und wobei der Schritt des Ausbildens des ersten geformten Körpers (22) aufweist: Befestigen der mehreren Klettverschlüsse (12) auf einer Fläche einer nicht-vulkanisierten Gummibahn (13') an vorbestimmten Abständen entlang einer Längsrichtung der Gummibahn, Aufbringen der nicht-vulkanisierten Gummibahn (13') auf die Aufbautrommel (21) mit der einen Fläche der Aufbautrommel zugewandt und Aufbringen verbleibender Reifenkomponenten, die den ersten geformten Körper (22) ausbilden, auf die nicht-vulkanisierte Gummibahn (13'), um den ersten geformten Körper (22) auszubilden.

3. Verfahren zur Herstellung eines Luftreifens nach Anspruch 1, wobei
der zumindest eine Klettverschluss (12) einen bandförmigen Klettverschluss (12) aufweist und wobei der Schritt des Ausbildens des ersten geformten Körpers (22) aufweist: periodisches Anbringen des bandförmigen Klettverschlusses (12) auf einer Fläche (13'a) einer nicht-vulkanisierten Gummibahn (13') entlang einer Längsrichtung der Gummibahn, Schneiden des bandförmigen Klettverschlusses (12) an vorgeschriebenen Abständen an Positionen entfernt von Befestigungspositionen davon, Aufbringen der nicht-vulkanisierten Gummibahn (13') auf die Aufbautrommel (21) mit der einen Fläche (13'a) der Aufbautrommel (21) zugewandt und Aufbringen verbleibender Reifenkomponenten, die den ersten geformten Körper (22) ausbilden, auf die nicht-vulkanisierte Gummibahn (13'), um den ersten geformten Körper (22) auszubilden.

4. Verfahren zur Herstellung eines Luftreifens nach Anspruch 1, wobei
der zumindest eine Klettverschluss (12) einen bandförmigen Klettverschluss (12) mit Schnittlinien, vorgesehen an vorgeschriebenen Abständen, aufweist und wobei der Schritt des Ausbildens des ersten geformten Körpers (22) aufweist: periodisches Anbringen des bandförmigen Klettverschlusses (12) auf einer Fläche einer nicht-vulkanisierten Gummibahn (13') entlang einer Längsrichtung der Gummibahn, Aufbringen der nicht-vulkanisierten Gummibahn (13') auf die Aufbautrommel (21) mit der einen Fläche der Aufbautrommel (21) zugewandt und Aufbringen verbleibender Reifenkomponenten, die den ersten geformten Körper ausbilden, auf die nicht-vulkanisierte Gummibahn (13'), um den ersten geformten Körper (22) auszubilden.

5. Verfahren zur Herstellung eines Luftreifens nach Anspruch 1, wobei
der zumindest eine Klettverschluss (12) einen bandförmigen Klettverschluss (12) mit einer Länge größer als eine innere Umfangslänge des ersten geformten Körpers (22), aufweist und wobei der Schritt des Ausbildens des ersten geformten Körpers (22) aufweist: periodisches Anbringen des bandförmigen Klettverschlusses (12) auf einer Fläche (13'a) einer nicht-vulkanisierten Gummibahn (13') entlang einer Längsrichtung der Gummibahn in einem Zustand, in dem Abschnitte des bandförmigen Klettverschlusses (12), die zwischen Anbringpositionen positioniert sind, gebogen sind, Aufbringen der nicht-vulkanisierten Gummibahn (13') auf die Aufbautrommel (21) mit der einen Fläche (13'a) der Aufbautrommel (21) zugewandt und Aufbringen verbleibender Reifenkomponenten, die den ersten geformten Körper (22) ausbilden, auf die nicht-vulkanisierte Gummibahn (13'), um den ersten geformten Körper (22) auszubilden.

6. Verfahren zur Herstellung eines Luftreifens nach einem der Ansprüche 2 bis 5, wobei
der/die bandförmige/en Klettverschluss/verschlüsse (12) mit einem Klebemittel auf der einen Fläche der nicht-vulkanisierten Gummibahn (13') angebracht ist/sind.

## Revendications

1. Procédé de production d'un pneu ayant au moins un élément de fixation à crochets et à boucles (12) prévu le long d'une direction circonférentielle du pneu sur une surface interne (13a) du pneu faisant face à une cavité (16) du pneu, comprenant les étapes qui consistent :
à former, sur un tambour de confection (21), un premier corps formé cylindrique (22) avec l'au moins un élément de fixation à crochets et à boucles (12) fixé par intermittence à une surface radialement interne (13a) de celui-ci le long d'une direction circonférentielle du tambour (21) ;
à former un pneu cru en élargissant le premier corps formé (22) en une forme toroïdale pour presser le premier corps formé (22) contre un côté périphérique interne d'un deuxième corps formé annulaire (24) ; et
à vulcaniser le pneu cru.

2. Procédé de production d'un pneu selon la revendication 1, dans lequel l'au moins un élément de fixation à crochets et à boucles (12) comprend une pluralité d'éléments de fixation à crochets et à boucles (12), et dans lequel l'étape de formation du premier corps formé (22) comprend le fait de fixer la pluralité d'éléments de fixation à crochets et à boucles (12) à une face d'une feuille de caoutchouc non vulcanisé (13') à des intervalles prescrits le long d'une direction longitudinale de la feuille de caoutchouc, d'appliquer la feuille de caoutchouc non vulcanisé (13') sur le tambour de confection (21) avec la face faisant face au tambour de confection et d'appliquer d'autres composants de pneu constituant le premier corps formé (22) sur la feuille de caoutchouc non vulcanisé (13') pour former le premier corps formé (22).

3. Procédé de production d'un pneu selon la revendication 1, dans lequel l'au moins un élément de fixation à crochets et à boucles (12) comprend un élément de fixation à crochets et à boucles en forme de courroie (12), et dans lequel l'étape de formation du premier corps formé (22) comprend le fait de fixer l'élément de fixation à crochets et à boucles en forme de courroie (12) par intermittence à une face (13'a) d'une feuille de caoutchouc non vulcanisé (13') le long d'une direction longitudinale de la feuille de caoutchouc, de découper l'élément de fixation à crochets et à boucles en forme de courroie (12) à des intervalles prescrits à des positions loin des positions de fixation de celui-ci, d'appliquer la feuille de caoutchouc non vulcanisé (13') sur le tambour de confection (21) avec la face (13'a) faisant face au tambour de confection (21) et d'appliquer d'autres composants de pneu constituant le premier corps formé (22) sur la feuille de caoutchouc non vulcanisé (13') pour former le premier corps formé (22).

4. Procédé de production d'un pneu selon la revendication 1, dans lequel l'au moins un élément de fixation à crochets et à boucles (12) comprend un élément de fixation à crochets et à boucles en forme de courroie (12) ayant des lignes de coupe prévues à des intervalles prescrits, et dans lequel l'étape de formation du premier corps formé (22) comprend le fait de fixer l'élément de fixation à crochets et à boucles en forme de courroie (12) par intermittence à une face d'une feuille de caoutchouc non vulcanisé (13') le long d'une direction longitudinale de la feuille de caoutchouc, d'appliquer la feuille de caoutchouc non vulcanisé (13') sur le tambour de confection (21) avec la face faisant face au tambour de confection (21) et d'appliquer d'autres composants de pneu constituant le premier corps formé sur la feuille de caoutchouc non vulcanisé (13') pour former le premier corps formé (22).

5. Procédé de production d'un pneu selon la revendication 1, dans lequel l'au moins un élément de fixation à crochets et à boucles (12) comprend un élément de fixation à crochets et à boucles en forme de courroie (12) ayant une longueur supérieure à une longueur périphérique interne du premier corps formé (22), et dans lequel l'étape de formation du premier corps formé (22) comprend le fait de fixer l'élément de fixation à crochets et à boucles en forme de courroie (12) par intermittence à une face (13'a) d'une feuille de caoutchouc non vulcanisé (13') le long d'une direction longitudinale de la feuille de caoutchouc dans un état où des parties de l'élément de fixation à crochets et à boucles en forme de courroie (12) situées entre des positions de fixation sont pliées, d'appliquer la feuille de caoutchouc non vulcanisé (13') sur le tambour de confection (21) avec la face (13'a) faisant face au tambour de confection (21) et d'appliquer d'autres composants de pneu constituant le premier corps formé (22) sur la feuille de caoutchouc non vulcanisé (13') pour former le premier corps formé (22).

6. Procédé de production d'un pneu selon l'une quelconque des revendications 2 à 5, dans lequel l'élément/les éléments de fixation à crochets et à boucles (12) est/sont fixé(s) avec un agent adhésif à la face de la feuille de caoutchouc non vulcanisé (13').
